# FASCICULE DE BREVET EUROPEEN

(11) **EP 1 781 154 B1**
(45) Date de publication et mention de la délivrance du brevet: **11.03.2009**
(21) Numéro de dépôt: 05775356.8
(22) Date de dépôt: 08.06.2005
(51) Int. Cl.: A47J 37/04, A47J 39/00

(54) **FRITEUSE A ENDUCTION AUTOMATIQUE DE MATIERE GRASSE**
FRITTEUSE MIT AUTOMATISCHEM FETTÜBERZUG
FRYER WITH AUTOMATIC COATING OF FAT

(30) Priorité: 08.06.2004 FR 0406214
(43) Date de publication de la demande: 09.05.2007
(73) Titulaire: SEB S.A., 69132 Ecully Cedex (FR)
(72) Inventeur: PAYEN, Jean-Marc, 21800 Quetigny (FR); BIZARD, Jean-Claude, 21121 Fontaine-les-Dijon (FR)
(74) Mandataire: Martin, Didier Roland Valéry
(86) Numéro de dépôt international: PCT/FR2005/001415
(87) Numéro de publication internationale: WO 2006/000699

(56) Documents cités:
- EP-A- 0 213 074
- WO-A1-83/03043
- DE-A1- 2 102 062
- DE-C1- 4 125 057
- US-A- 4 581 989
- US-A- 4 649 810
- US-A- 6 077 555

## Description

### DOMAINE TECHNIQUE

La présente invention se rapporte au domaine technique général des appareils de cuisson d'aliments, et en particulier des appareils domestiques conçus pour frire des aliments à l'aide de matière grasse, du genre friteuses.

La présente invention concerne une friteuse comprenant un corps principal destiné à accueillir en son sein des aliments à frire.

La présente invention concerne également un procédé de friture d'aliments.

### TECHNIQUE ANTERIEURE

Il est bien connu, dans l'art antérieur, de frire des aliments, tels que des morceaux de pommes de terre, à l'aide d'une friteuse électrique domestique. De manière classique, une telle friteuse électrique domestique comprend d'une part une cuve destinée à être remplie d'huile ou de matière grasse, et d'autre part des résistances chauffantes permettant de chauffer le contenu de la cuve.

Les friteuses électriques connues permettent ainsi de réaliser un bain d'huile ou de matière grasse fondue à haute température dans lequel on plonge les aliments à frire, par exemple par l'intermédiaire d'un panier de cuisson.

Ce mode de friture classique par immersion dans un bain d'huile chaude, s'il donne généralement satisfaction, présente toutefois de nombreux inconvénients.

En premier lieu, ces friteuses classiques mettent en oeuvre, pour réaliser le bain de cuisson, une quantité importante d'huile. Cela implique des difficultés de manipulation pour l'utilisateur lorsqu'il remplit sa friteuse, lorsqu'il la déplace et surtout lorsqu'il la vide.

Ce bain de cuisson à haute température est également source de risque de brûlures, que ce soit par projections hors de la cuve de l'appareil ou par suite d'une maladresse de l'utilisateur (renversement de l'appareil). Ce risque de brûlures ou d'accidents est accru par le fait qu'une quantité aussi importante d'huile nécessite, avant d'introduire les aliments dans la cuve pour les frire, une phase de préchauffage relativement longue. Cela peut conduire l'utilisateur à oublier son bain d'huile en phase de préchauffe, avec toutes les conséquences néfastes que cette absence de surveillance pourrait engendrer.

Par ailleurs, ces friteuses connues s'avèrent d'un usage relativement coûteux, puisqu'elles nécessitent l'achat régulier d'une grande quantité d'huile (au minimum 1,5 à 2 L d'huile sont en effet généralement nécessaires pour frire 1Kg de morceaux de pommes de terre fraîches). L'utilisateur est donc naturellement conduit à économiser l'huile en réutilisant plusieurs fois le même bain de cuisson, ce qui est peu satisfaisant du point de vue de l'hygiène et du goût. De plus, l'utilisateur peut réutiliser un bain de cuisson, alors que celui-ci s'est dégradé, ce qui peut être néfaste pour la santé. Lorsque l'utilisateur se débarrasse de l'huile usagée, ceci peut avoir des conséquences dommageables pour l'environnement.

Enfin, le chauffage à haute température d'une telle quantité d'huile provoque d'une part des dégagements d'odeurs qui peuvent s'avérer particulièrement désagréables, et d'autre part une polymérisation de l'huile qui rend le nettoyage de l'appareil difficile et contraignant.

On connaît par ailleurs des produits alimentaires prêts à l'emploi, dits « *frites au four*», qui consistent en des morceaux de pommes de terre précuits et pré-imprégnés d'huile, destinés à être cuits dans un four, sans immersion dans un bain d'huile.

Les qualités gustatives de ces « *frites au four* » sont généralement jugées médiocres et en tout cas très éloignées de celles des frites cuites par immersion dans un bain d'huile, lesquelles présentent notamment un coeur moelleux entouré d'une enveloppe croustillante.

De surcroît, le mode de cuisson « *au four* » impose d'utiliser des produits déjà préparés, qui, par essence, ne présentent pas des qualités organoleptiques aussi attrayantes que celles d'un aliment frais.

Une friteuse à cuisson sèche et un procédé de friture d'aliments par cuisson sèche sont décrits dans le document US-A-4 581 989.

### EXPOSE DE L'INVENTION

L'objet assigné à l'invention vise en conséquence à porter remède aux différents inconvénients énumérés précédemment et à proposer une nouvelle friteuse et un nouveau procédé de friture qui soient particulièrement hygiéniques, sûrs et économiques à l'usage, ainsi que faciles à utiliser et à mettre en oeuvre, tout en laissant une grande liberté à l'utilisateur dans le choix des aliments qu'il souhaite frire.

Un autre objet de l'invention vise à proposer une nouvelle friteuse et un nouveau procédé de friture de conceptions particulièrement simples et fiables.

Un autre objet de l'invention vise à proposer une nouvelle friteuse et un nouveau procédé de friture qui permettent d'obtenir un goût et une coloration des aliments frits particulièrement homogènes et attrayants.

Un autre objet de l'invention vise à proposer une nouvelle friteuse et un nouveau procédé de friture qui soient à même de procurer un résultat optimal quelles que soient la taille et la quantité des aliments à frire.

Un autre objet de l'invention vise à proposer une nouvelle friteuse et un nouveau procédé de friture qui n'affectent sensiblement pas l'intégrité et la forme des aliments.

Un autre objet de l'invention vise à proposer une nouvelle friteuse et un nouveau procédé de friture ne nécessitant, en terme de maintenance et de nettoyage, que des opérations particulièrement faciles et rapides, pouvant être effectuées aisément après chaque cuisson.

Un autre objet de l'invention vise à proposer une nouvelle friteuse et un nouveau procédé de friture qui permettent à l'utilisateur de contrôler de façon précise la quantité et la qualité de la matière grasse utilisée pour la cuisson.

Un autre objet de l'invention vise à proposer une nouvelle friteuse et un nouveau procédé de friture dont l'utilisation et la mise en oeuvre ne nécessitent qu'un minimum d'interventions de la part de l'utilisateur.

Un autre objet de l'invention vise à proposer une nouvelle friteuse et un nouveau procédé de friture qui permettent une cuisson rapide des aliments.

Un autre objet de l'invention vise à proposer une nouvelle friteuse et un nouveau procédé de friture qui permettent une excellente qualité de cuisson d'aliments même lorsque ces derniers présentent des dimensions très différentes entre eux.

Un objet complémentaire de l'invention vise à proposer une nouvelle friteuse et un nouveau procédé de friture qui sont économes en consommation d'énergie tout en permettant d'obtenir des produits frits présentant d'excellents aspect et texture.

Les objets assignés à l'invention sont atteints à l'aide d'une friteuse à cuisson sèche selon la revendication 1.

Les objets assignés à l'invention sont également atteints à l'aide d'un procédé de friture d'aliments par cuisson sèche selon la revendication 23.

### DESCRIPTIF SOMMAIRE DES DESSINS

D'autres particularités et avantages de l'invention apparaîtront et ressortiront plus en détails à la lecture de la description faite ci-après, en référence aux dessins annexés, donnés à titre purement illustratif et non limitatif, dans lesquels :
- La figure 1 illustre, selon une vue générale en perspective, une friteuse conforme à un premier mode de réalisation de l'invention.
- La figure 2 illustre, selon une vue latérale en coupe médiane, la friteuse représentée à la figure 1.
- La figure 3 illustre, selon une vue de côté, un sous-ensemble pale-poignée faisant partie de la friteuse des figures 1 et 2.
- La figure 4 illustre, selon une vue de dessus, le sous-ensemble de la figure 3.
- La figure 5 illustre, selon une vue latérale en coupe médiane, le sous-ensemble des figures 3 et 4.
- La figure 6 illustre, selon une vue latérale partielle en coupe, une friteuse conforme à un second mode de réalisation de l'invention.

### MEILLEURE MANIERE DES REALISER L'INVENTION

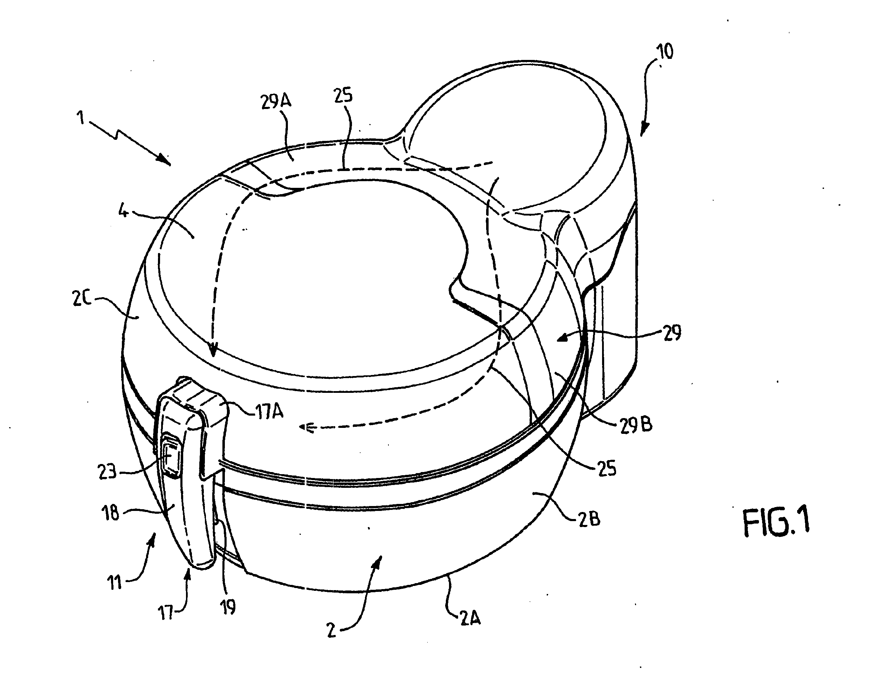

La friteuse 1 illustrée aux figures 1 à 5 est une friteuse électrique conçue et dimensionnée pour un usage domestique. L'invention n'est cependant pas limitée au cadre familial, et pourra concerner également les friteuses semi-professionnelles ou professionnelles.

La friteuse domestique 1 illustrée aux figures est préférentiellement conçue et dimensionnée pour frire des aliments particulaires, tels que des morceaux de pommes de terre, en vue d'obtenir des frites. Ces morceaux de pommes de terre pourront avoir été coupés manuellement par l'utilisateur, ou avoir été achetés déjà préparés dans le commerce, à l'état frais ou surgelé. La friteuse 1 conforme à l'invention n'est cependant pas limitée à l'élaboration de pommes de terre frites, et peut être utilisée pour faire des fritures avec d'autres sortes d'aliments (viandes, poissons, légumes...) sans pour autant que l'on sorte du cadre de l'invention.

La friteuse conforme à l'invention est une friteuse à cuisson sèche. Par « *cuisson sèche* », on désigne ici un mode de cuisson d'aliments sans immersion de ces derniers dans un bain d'huile ou de matière grasse, que cette immersion soit partielle et/ou temporaire pendant le cycle de cuisson. L'expression « *cuisson sèche »* désigne au contraire une cuisson dans laquelle les aliments sont certes « *mouillés* » par un médium de cuisson (huile par exemple), mais sans pour autant être plongés ou baigner dans ledit médium. En cela, le principe de fonctionnement de la friteuse conforme à l'invention diffère de celui d'une friteuse classique à bain d'huile.

La friteuse 1 conforme à l'invention comprend, de façon classique, un corps principal 2 destiné à accueillir en son sein des aliments à frire (non représentés).

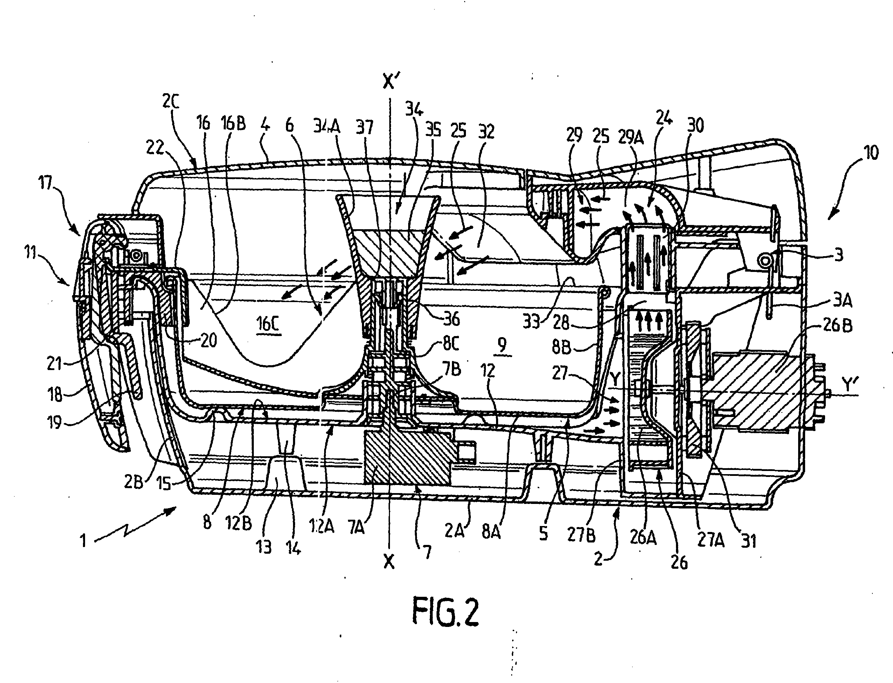

Tel que cela est représenté aux figures 1 et 2, le corps principal 2 comprend une embase 2A, destinée à former le socle de la friteuse 1, et conformée pour reposer de façon stable sur un plan ou un support.

A partir de l'embase 2A et à la périphérie de cette dernière s'élève une jupe latérale 2B, réalisée par exemple en un matériau métallique ou en un matériau plastique, et formant l'enveloppe externe de la friteuse 1. La jupe latérale 2B peut présenter toutes formes géométriques appropriées et esthétiques. Par exemple, dans le cas de la friteuse représentée à la figure 1, la jupe 2B présente, en vue de dessus, une forme globalement en « 8 », le sommet du « 8 » définissant l'arrière 10 de la friteuse 1, tandis que la base du « 8 » définit l'avant 11 de ladite friteuse 1.

Avantageusement, le corps principal 2 est muni d'un couvercle 2C monté mobile entre d'une part une position de fermeture (représentée à la figure 1), dans laquelle le couvercle 2C forme avec le corps principal 2 une enceinte sensiblement fermée autour des aliments à frire, et d'autre part une position d'ouverture (non représentée), autorisant l'introduction des aliments à frire au sein du corps principal 2. En d'autres termes, le couvercle 2C forme, en coopération avec la jupe 2B et l'embase 2A, un boîtier clos, c'est-à-dire de préférence sensiblement hermétique, autorisant une cuisson en atmosphère fermée. La fermeture sensiblement étanche du corps principal 2 par le couvercle 2C peut être réalisée par exemple par l'intermédiaire de joints d'étanchéité (non représentés aux figures).

Tel que cela est représenté aux figures 1 et 2, le couvercle 2C est avantageusement monté sur le corps principal 2 par une liaison pivot élastique, réalisée par une charnière 3 munie d'un ressort de torsion 3A, de telle sorte que la position d'ouverture du couvercle 2C soit également une position de rappel. Ladite charnière 3 est par ailleurs de préférence positionnée en périphérie de l'appareil, au voisinage de l'arrière 10 de la friteuse 1, tel que cela est représenté à la figure 2.

Avantageusement, et tel que cela est représenté à la figure 1, le couvercle 2C pourra être pourvu d'une zone transparente de vision 4 permettant de surveiller l'évolution de la friture à l'intérieur de l'appareil pendant le cycle de cuisson, lorsque le couvercle 2C est fermé sur le corps principal 2.

Selon une caractéristique importante de l'invention, la friteuse 1 comporte, monté au sein du corps principal 2, un moyen pour enduire automatiquement les aliments à frire d'une pellicule de matière grasse, par brassage desdits aliments avec de la matière grasse.

En d'autres termes, contrairement aux dispositifs de l'art antérieur, dans lesquels les aliments sont immergés dans un bain d'huile, l'invention repose sur le principe d'une friture réalisée en recouvrant simplement la surface des aliments d'une mince couche d'huile ou de toute autre matière grasse alimentaire appropriée. Ainsi, la cuisson ne se fait pas dans un bain d'huile, lequel implique la présence d'une quantité importante de matière grasse entourant tout ou partie des aliments, mais bien grâce à une faible quantité d'huile formant un mince revêtement sensiblement homogène à la surface de chacun des aliments placés au sein du corps principal 2.

Ainsi que cela a été précisé précédemment, l'enduction de matière grasse est réalisée de manière automatique, c'est-à-dire sans nécessité d'une contribution essentielle et directe de l'utilisateur pour l'établissement de la pellicule de graisse à la surface des aliments. En d'autres termes, grâce à la présence, au sein du corps principal 2, d'un moyen pour enduire automatiquement les aliments d'une pellicule de matière grasse, l'utilisateur n'a qu'à se contenter d'introduire les aliments dans la friteuse 1, au sein du corps principal 2, puis d'activer la mise en oeuvre du moyen d'enduction automatique (dans la mesure où cette activation n'est pas elle-même automatique) pour que la friteuse 1 se charge elle-même directement, au sein du corps principal 2, d'enduire individuellement les aliments d'une fine couche de matière grasse, sans que l'utilisateur ne soit contraint de réaliser lui-même cette opération de façon manuelle.

Le terme « *brassage »* est ici relatif à l'action de brasser, c'est-à-dire de *« remuer en mêlant* ». Au sens de l'invention, l'enduction des aliments est donc obtenue en réunissant des aliments et de la matière grasse, et en les brassant pour recouvrir les aliments d'une pellicule de matière grasse.

L'action de brassage mise en oeuvre dans le cadre de l'invention implique de préférence un retournement des aliments et de la matière grasse, retournement qui peut par exemple être opéré par soulèvement des aliments et mise en rotation de ces derniers sur eux-mêmes.

Avantageusement, le moyen pour enduire automatiquement les aliments d'une pellicule de matière grasse comprend d'une part un moyen de réception 5 conçu pour contenir, de préférence directement, à la fois les aliments à frire et de la matière grasse, notamment lorsque cette dernière se présente sous forme liquide (huile ou graisse fondue), et d'autre part un moyen de remuage 6 des aliments contenus dans le moyen de réception 5.

La fonction de brassage est donc préférentiellement obtenue par la coopération d'une part du moyen de remuage 6, qui contribue en particulier à conférer aux aliments et à la matière grasse un mouvement tridimensionnel, du genre mouvement de malaxage, et d'autre part du moyen de réception 5, qui assure notamment une fonction de maintien des aliments dans une zone prédéterminée de l'appareil.

Avantageusement, le moyen de réception 5 est monobloc, c'est-à-dire qu'il présente un caractère unitaire, et qu'il est formé de préférence d'une seule pièce. De manière préférentielle, afin de remplir sa fonction de contenance d'aliments et de matière grasse, le moyen de réception 5 est également non ajouré, à la différence d'un panier, pour éviter toute fuite de matière grasse.

En d'autres termes, le moyen de réception 5 est de préférence sensiblement étanche aux matières liquides ou semi-liquides.

Avantageusement, le moyen de réception 5 et le moyen de remuage 6 sont distincts.

Le moyen de réception 5 et le moyen de remuage 6 sont conçus pour être mis en mouvement l'un par rapport à l'autre, de façon à brasser et remuer les aliments et la matière grasse au sein du moyen de réception 5, afin de recouvrir sensiblement chaque aliment d'une pellicule sensiblement uniforme, homogène et continue de matière grasse.

Avantageusement, le moyen de remuage 6 est monté immobile en position relativement au corps principal 2, tandis que le moyen de réception 5 est d'une part monté à rotation relativement au corps principal 2 et au moyen de remuage 6, et d'autre part relié fonctionnellement à un moyen moteur 7 pour être entraîné en rotation par ce dernier.

Un tel principe de montage correspond à celui mis en oeuvre sur la friteuse 1 conforme à la première variante de réalisation illustrée aux figures 1 à 5, et qui fera l'objet de la description qui suit.

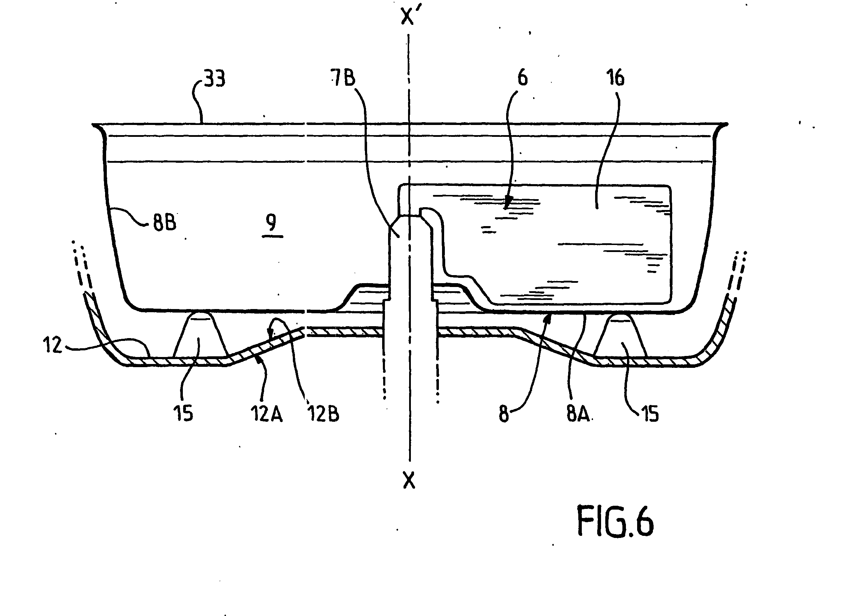

Il est néanmoins tout à fait envisageable, sans pour autant sortir du cadre de l'invention, que la friteuse 1 mette en oeuvre un moyen de remuage 6 monté mobile relativement au corps principal et au moyen de réception 5, le moyen de réception 5 pouvant alors être monté immobile en position au sein du corps principal (cas de la seconde variante illustrée à la figure 6), ou être monté mobile au sein dudit corps principal.

Ainsi, conformément à la seconde variante de réalisation illustrée à la figure 6, le moyen de réception 5 est de préférence monté immobile en position relativement au corps principal 2, tandis que le moyen de remuage 6 est d'une part monté à rotation relativement au moyen de réception 5, et d'autre part relié fonctionnellement à un moyen moteur 7 pour être entraîné en rotation par ce dernier.

Avantageusement, le moyen de réception 5 comprend un récipient 8 délimitant un volume interne 9, destiné à accueillir et contenir à la fois les aliments et de la matière grasse, même lorsque cette dernière est liquide (cas d'une huile par exemple) ou semi-liquide (cas d'une graisse fondue de viscosité élevée par exemple).

Avantageusement, le récipient 8 est monté de façon amovible sur le corps principal 2.

De manière préférentielle, le récipient 8 comprend un fond de récipient 8A, de préférence sensiblement plan et lisse, à partir de la périphérie interne et externe duquel s'élèvent en vis-à-vis respectivement une paroi latérale externe 8B et une paroi latérale interne 8C, de telle sorte que le récipient 8 présente sensiblement une forme générale de canal annulaire, présentant sensiblement une symétrie de révolution d'axe vertical X-X'. En d'autres termes, le récipient 8 présente globalement une forme toroïdale, générée par la rotation autour de l'axe de symétrie X-X' d'un profil ouvert sensiblement en forme de « U ».

D'autres formes de récipient sont bien évidemment envisageables. Par exemple, tel que cela est illustré à la figure 6, le fond 8A peut présenter une forme discoïde, à partir de la périphérie de laquelle s'élève une paroi latérale annulaire 8B.

De manière préférentielle, le fond 8A et/ou les parois latérales internes et externes 8B, 8C sont sensiblement pleins, c'est-à-dire non ajourés, du moins dans la zone d'interface avec les aliments et la matière grasse, afin d'éviter toute fuite de cette dernière hors du récipient 8. De manière préférentielle, le fond sera intégralement plein tandis que les parois latérales 8B, 8C seront pleines au moins dans leur partie inférieure, c'est-à-dire à proximité de leur raccordement avec le fond 8A.

De préférence, le récipient 8 délimite un volume 9 ouvert, c'est-à-dire délimité uniquement par le fond 8A et les parois latérales internes et externes 8B, 8C, sans élément de couvercle disposé à l'opposé du fond 8A.

Selon le mode de réalisation des figures 1 à 5, l'entraînement en rotation du récipient 8 est effectué à l'aide d'un premier moteur électrique 7A formant moyen moteur 7, ledit premier moteur électrique 7A étant pourvu d'un arbre de sortie 7B s'étendant de façon sensiblement coaxiale à l'axe X-X', et solidarisé à la paroi latérale interne 8C. Plus précisément, l'arbre de sortie 7B est enchâssé, de préférence de façon amovible, dans le manchon formé par la paroi latérale interne 8C.

Dans le mode de réalisation de la figure 6, le récipient 8 est indépendant de l'arbre 7B, ce dernier étant solidarisé au moyen de remuage 6 afin d'entraîner ledit moyen de remuage 6 en rotation autour de l'axe X-X'. Dans cette variante, un orifice de passage est ménagé dans le fond 8A afin d'autoriser le passage et la rotation de l'arbre 7B.

Dans les exemples de réalisation illustrés aux figures 2 et 6, le premier moteur électrique 7A est installé dans un logement délimité, dans la direction de l'axe X-X', d'une part par l'embase 2A, et d'autre part par un carter 12. Ledit carter 12 présente une face interne 12A située en regard du premier moteur électrique 7A, et une face externe 12B opposée. La face interne 12A du carter 12 est maintenue à distance de l'embase 2A par des entretoises, formées de préférence par des pieds 13, 14 en appui mutuel, issus respectivement de l'embase 2A et de la face interne 12A du carter 12.

De manière préférentielle, tel que cela est illustré aux figures 2 et 6, des bossages 15 sont issus de la face externe 12B du carter 12, lesdits bossages 15 faisant office, dans la variante de la figure 2, de moyens d'appui glissant pour le récipient 8, et de moyen d'appui simple pour le récipient 8 dans le cas de la variante de la figure 6.

De manière préférentielle, le moyen de remuage 6 comprend également une pale 16 disposée au sein du volume interne 9 délimité par le récipient 8, de façon à former, dans la variante de la figure 2, un obstacle sensiblement immobile à l'encontre des aliments mis en mouvement par la rotation du récipient 8. Ainsi, une fois les aliments et la matière grasse disposés (manuellement et/ou automatiquement) dans le récipient 8, ce dernier est mis en rotation à l'aide du premier moteur électrique 7A, ce qui entraîne un déplacement globalement circulaire des aliments et de la matière grasse autour de l'axe X-X', jusqu'à ce que les aliments rencontrent l'obstacle formé en l'occurrence par la pale 16, obstacle qui contribue à retourner et brasser les aliments et la matière grasse, réalisant ainsi l'enduction rapide et sensiblement uniforme desdits aliments.

Dans la variante de la figure 6, c'est au contraire la pale 16 qui, lorsqu'elle est mise en rotation dans le récipient 8, au sein du volume interne 9, assure un déplacement actif des aliments et de la matière grasse de façon à réaliser l'enduction desdits aliments.

Afin d'optimiser, en terme d'homogénéité et de rapidité, l'enduction des aliments par une pellicule de matière grasse, la pale 16 mise en oeuvre dans la variante de la figure 2 est de préférence conformée pour :
- d'une part s'élever, à partir d'un bord inférieur 16A situé sensiblement au niveau du fond 8A du récipient 8, jusqu'à un bord supérieur 16B, la pale 16 présentant une découpure 16C en forme de « V » débouchant sensiblement au niveau dudit bord supérieur 16B,
- et d'autre part s'étendre latéralement sensiblement de la paroi latérale externe 8B jusqu'à la paroi latérale 8C.

En d'autres termes, la pale 16 de la variante de la figure 2 forme un obstacle de hauteur D variable dans la direction radiale définie par rapport à l'axe de symétrie X-X'. Ainsi, cette hauteur D est maximale au niveau des extrémités latérales délimitées respectivement par la paroi latérale externe 8B et la paroi latérale interne 8C, la hauteur D décroissant régulièrement à partir de la paroi latérale externe 8B et de la paroi latérale interne 8C jusqu'à un minimum Dₘᵢₙ (pointe du « *V* ») correspondant par exemple sensiblement au milieu de la distance séparant lesdites parois latérales externes 8B et interne 8C.

Cette disposition technique confère un caractère universel à la pale 16, qui est de ce fait apte à assurer le retournement et le brassage des aliments quelles que soient leur quantité et leur taille, dans la limite du dimensionnement de la friteuse 1.

En particulier, dans le cas d'une faible quantité d'aliments, la faible hauteur au centre (pointe du « V ») de la pale 16 est dimensionnée pour permettre d'assurer tout de même un brassage suffisant pour enduire correctement de matière grasse les aliments.

De façon préférentielle, afin de faciliter le travail de la pale 16, le bord inférieur 16A de cette dernière est incurvé pour guider les aliments vers le bord supérieur 16B lorsque le récipient 8 est mis en rotation.

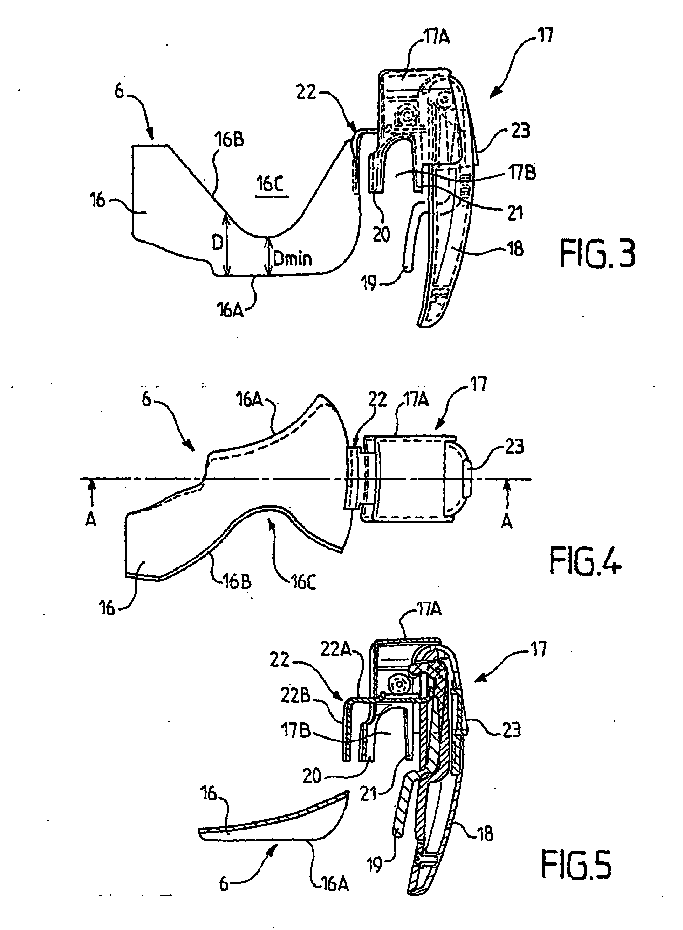

Avantageusement, le bord inférieur 16A de la pale est également biseauté, et présente une incidence oblique relativement au trajet des aliments dans le plan horizontal (cf. figure 4), afin de faciliter l'accostage de ces derniers sur la pale 16.

De façon préférentielle, la pale est également globalement inclinée, à la manière d'un tremplin, relativement à l'axe X-X', de façon à faciliter l'engagement des aliments sans les abîmer.

La pale 16 est de préférence réalisée en un matériau présentant de bonnes propriétés de glissement. La pale peut avantageusement être revêtue d'un matériau anti-adhésif, par exemple du polytétrafluoroéthylène (PTFE), ou encore être réalisée en acier inoxydable (inox) ou en polyamide 4-6.

Le fond du récipient 8 présente avantageusement des conformations, du genre protubérances, susceptibles de servir de butée pour les aliments à frire, afin de permettre à la pale 16, agissant en coopération avec lesdites conformations, de soulever lesdits aliments, au lieu de simplement les repousser dans le récipient 8.

Avantageusement, la pale 16 est également montée de façon amovible sur le corps principal 2.

A cette fin, dans le cadre non limitatif de la variante de réalisation représentée à la figure 2, la pale 16 est solidaire (de façon amovible ou non) d'une poignée 17, de sorte que la pale 16 et la poignée 17 forment un sous-ensemble unitaire et indépendant qui peut être monté de façon amovible sur le corps principal 2.

Pour cela, la poignée 17 comprend de préférence une pièce d'accostage 17A munie d'une encoche 17B s'étendant entre une façade avant 20 et une façade arrière 21, de façon à former un étrier sensiblement en forme de « U » inversé.

Cet étrier est conformé pour venir reposer sur une pièce de réception complémentaire solidaire du corps principal 2 de la friteuse 1. Lorsque la poignée 17 repose ainsi sur le corps principal 2, la façade avant 20 vient s'interposer entre la paroi latérale externe 8B du récipient 8 et la jupe 2B, ou plus précisément, tel que cela est représenté à la figure 2, entre la paroi latérale externe 8B et le carter 12.

La poignée 17 comprend également une patte de serrage 22, conformée en forme de « L », un premier bras 22A du « L » étant monté à coulissement radial (c'est-à-dire perpendiculairement à l'axe X-X') sur la pièce 17A, tandis que le deuxième bras 22B est perpendiculaire au premier et s'étend sensiblement vers le bas parallèlement à la façade avant 20.

De manière avantageuse, la pale 16 est montée solidaire de la patte de serrage 22.

Lorsque la poignée 17 est positionnée sur le corps principal 2, la face latérale externe 8B du récipient 8 est ainsi interposée entre la façade avant 20 et la patte de serrage 22, laquelle supporte la pale 16.

La poignée 17 comprend également un organe de préhension manuelle 18, monté à pivotement sur la pièce 17A entre une position de cuisson, dans laquelle l'organe de préhension manuelle 18 s'étend sensiblement parallèlement à la jupe 2B et à l'axe X-X', et une position d'extraction du récipient 8, dans laquelle l'organe de préhension manuelle 18 s'étend sensiblement horizontalement, c'est-à-dire de façon sensiblement perpendiculaire à l'axe X-X'.

Lorsque l'organe de préhension manuelle 18 est en position horizontale d'extraction, l'utilisateur peut, en actionnant un levier de serrage 19 monté à pivotement coaxialement à l'organe de préhension 18, agir sur la patte de serrage 22, de façon à exercer un pincement de la paroi latérale externe 8B du récipient 8, par rapprochement de la patte de serrage 22 vers la façade avant 20. Ainsi, l'utilisateur est en mesure d'extraire simultanément le récipient 8 (lorsque celui-ci est amovible) et la pale 16 à l'aide de la poignée 17, qui est débrayable du récipient 8.

De façon préférentielle, la poignée 17 est munie d'un système de verrouillage/ déverrouillage 23, monté sur l'organe de préhension manuel 18, et agencé de façon à verrouiller automatiquement l'organe de préhension manuelle 18 en position d'extraction. L'utilisateur peut ensuite, en agissant sur ce moyen de verrouillage / déverrouillage 23, déverrouiller l'organe de préhension 18 pour libérer le récipient 8 et ramener l'organe de préhension 18 en position de cuisson.

Le chauffage des aliments enduits de matière grasse peut être réalisé, au sein de la friteuse 1, par tous moyens de chauffe connus internes (i.e. intégrés à la friteuse 1) ou externes (i.e. indépendants de la friteuse 1), dans la mesure où ces moyens de chauffe sont conçus et dimensionnés pour permettre un excellent échange thermique avec les aliments, ce qui s'avère d'autant plus important que la cuisson ne s'effectue pas en bain d'huile, mais simplement avec une enduction d'huile.

La friteuse 1 comporte, monté sur le corps principal 2, un moyen de chauffe principal 24 conçu pour générer un flux chauffant 25, lequel est orienté de façon à frapper sensiblement directement au moins une partie des aliments au sein du corps principal 2.

Par « *moyen de chauffe principal* », on désigne un moyen de chauffe qui assure à lui seul au moins l'essentiel de l'apport thermique permettant la cuisson. De façon préférentielle, le moyen de chauffe principal 24 est conçu et agencé pour assurer la totalité dudit apport thermique.

Par flux chauffant, on désigne ici un faisceau thermique directionnel présentant un caractère dynamique contrôlé de façon positive, au contraire par exemple d'un simple effet de convection naturelle pouvant être obtenu par un chauffage purement statique.

Du fait que le flux chauffant 25 est dirigé pour venir s'exercer directement, sans médium intermédiaire (tel qu'un fond de récipient par exemple), sur les aliments présents dans le récipient 8, cela contribue à un excellent échange thermique, et procure, en coopération avec la pellicule d'huile présente sur les aliments, une cuisson sensiblement équivalente à celle obtenue en bain d'huile mais sans les inconvénients de cette dernière.

Avantageusement, le flux chauffant 25 est un flux d'air chaud. L'invention n'est cependant pas limitée à un flux d'air chaud, et on pourrait envisager que le flux chauffant soit issu d'un chauffage à infra-rouges par exemple. Un chauffage à air chaud est toutefois préféré, du moins dans le mode spécifique de réalisation représenté aux figures, car il donne de meilleurs résultats qu'un chauffage à infra-rouges, notamment dans le cas d'aliments découpés manuellement et présentant des morceaux de taille et d'épaisseur diverses.

Avantageusement, le flux d'air chauffant 25 est dirigé sensiblement vers le moyen de remuage, en l'occurrence la pale 16. En effet, par sa fonction d'obstacle, la pale 16 va contribuer à maintenir agglutinée dans son voisinage la majeure partie, voire la totalité des aliments présents dans le plat 8. Dès lors, il suffit d'orienter le flux d'air chauffant 25 vers la pale 16 pour chauffer de manière optimale les aliments, sans qu'il soit nécessaire d'exercer un chauffage uniforme sur l'ensemble du récipient 8. La combinaison d'une pale 16 et d'un flux d'air chaud 25 localisé s'avère donc particulièrement avantageuse en terme d'efficacité de cuisson, d'économie d'énergie et de simplicité de conception.

Avantageusement, le flux d'air chaud 25 est un flux recyclé, c'est-à-dire que la friteuse 1 travaille en ambiance sensiblement fermée, de l'air présent à l'intérieur du corps principal 2 étant prélevé pour être chauffé, puis propulsé sur les aliments. Cet air chaud propulsé se refroidit au contact des aliments, puis est à nouveau prélevé pour être réchauffé et ainsi de suite.

De manière avantageuse, le moyen de chauffe principal 24 comprend un ventilateur centrifuge 26 générant un flux aéraulique en aspirant de l'air au sein du corps principal 2 par au moins une ouïe d'entrée 27, ménagée de préférence latéralement relativement au récipient 8, et en refoulant cet air par au moins une ouïe de sortie 28 dans un dispositif de canalisation 29, lequel débouche en direction et au-dessus des aliments présents dans le corps principal 2.

Un filtre peut être prévu à l'entrée du ventilateur centrifuge 26, par exemple au niveau de l'ouïe d'entrée 27. Ladite ouïe d'entrée 27 est avantageusement agencée derrière la paroi latérale du récipient 8, et permet de capter l'air présent au voisinage de la périphérie dudit récipient 8, par aspiration autour dudit récipient 8.

Avantageusement, le moyen de chauffe principal 24 comprend également un élément calorifique 30 positionné au sein du flux aéraulique, de préférence à l'aval de l'ouïe de sortie 28 dans le sens du flux, de façon à transformer le flux aéraulique en flux chauffant 25.

Avantageusement, l'élément calorifique 30 comprend un système de résistances électriques avec des bandes résistives et/ou des fils résistifs maintenu(e)s sur un support isolant, ce qui s'avère être une solution économique en terme de place et performante en terme de rendement. De façon préférentielle, les bandes résistives et/ou les fils résistifs sont placé(e)s dans le flux aéraulique en fonction de la distribution de la vitesse d'air au sein du flux, de façon à éviter tout point chaud. La puissance de ce système de résistances électriques est de plus déterminée pour assurer un chauffage rapide des aliments sans les dessécher. De façon préférentielle, ladite puissance est sensiblement comprise entre 1 000 et 2 000 W, et plus préférentiellement entre 1 200 et 1 400 W.

De manière préférentielle, le ventilateur centrifuge 26 comprend une turbine 26A entraînée en rotation, selon un axe Y-Y' sensiblement perpendiculaire à l'axe X-X', par un deuxième moteur électrique 26B. La turbine 26A est de préférence insérée dans une volute formée d'un flasque arrière 27A rapporté sur un flasque avant 27B, ledit flasque avant 27B venant de préférence de matière avec le carter 12. Le flasque arrière 27A, en coopération avec la jupe 2B, forme ainsi un logement sensiblement fermé pour le deuxième moteur électrique 26B, lequel entraîne, de manière préférentielle, une roue de ventilation 31, positionnée à l'intérieur du logement du moteur 26B et servant au refroidissement dudit moteur 26B.

Avantageusement, le flux chauffant arrive avec une incidence rasante (i.e. inférieure à 45°) sur les aliments. Cette disposition technique permet d'agencer le dispositif de canalisation latéralement dans l'appareil. Ce guidage latéral de l'air chaud permet d'alléger le couvercle et de faciliter la manipulation de l'appareil tout en conservant une cuisson appropriée. Le nettoyage est également facilité, de même que le retrait ou la mise en place du récipient de cuisson 8.

Avantageusement, le dispositif de canalisation 29 comprend deux conduits 29A, 29B s'étendant en forme de Y à la périphérie de la friteuse 1 et prenant naissance, de façon commune, sensiblement au niveau de l'élément calorifique 30 ou à l'aval de ce dernier, dans le sens du flux.

De manière préférentielle, les conduits 29A, 29B sont montés dans le couvercle 2C et se terminent chacun, dans le sens du flux 25, par une tuyère 32 orientée de façon oblique relativement à l'axe X-X', vers l'avant 11 et le bas de la friteuse 1. La température d'air la plus élevée sera trouvée de préférence au voisinage desdites tuyères 32, face à ces dernières.

Dans cette configuration, le flux d'air chauffant 25 comprend ainsi deux veines distinctes qui convergent, de façon sensiblement symétrique, vers la pale 16. Ces deux veines convergeant de manière opposée contribuent à un excellent échange thermique avec les aliments, car elles génèrent et/ou favorisent, à leur point de rencontre, l'apparition de turbulences favorables à la transmission de chaleur.

La rencontre de deux flux d'air chaud sur les aliments est intéressante pour la cuisson car elle permet de réduire le gradient de température, d'humidité et de concentration en aérosol d'huile, par rapport à la mise en oeuvre d'un flux unique. Cette rencontre des flux permet ainsi une meilleure diffusion de la chaleur, ce qui améliore la cuisson.

Il est cependant bien entendu que l'invention n'est pas limitée à un nombre particulier de veines de fluide, et qu'il est tout à fait envisageable que le flux d'air chauffant 25 comprenne une seule veine ou plus de deux veines.

L'invention concerne en particulier de façon indépendante (non revendiquée en tant que telle) une friteuse comprenant au moins deux veines d'air chaud, convergeant l'une vers l'autre, et dirigées selon une incidence oblique vers les aliments à cuire.

Avantageusement l'ensemble du circuit aéraulique (lequel comprend notamment le ventilateur 26, l'élément calorifique 30 et le dispositif de canalisation 29) est conçu et dimensionné pour que le flux d'air chaud 25 arrive sur les aliments contenus dans le récipient 8 avec une vitesse sensiblement supérieure à 2 m/s, et de préférence sensiblement supérieure ou égale à 3 m/s. Le choix d'une telle vitesse minimale permet d'assurer la cuisson de manière optimale, en favorisant d'une part la création, à la surface des aliments, d'une enveloppe croustillante sans dessèchement de surface, et d'autre part une cuisson lente à coeur des aliments, de façon à leur conserver une consistance moelleuse.

Avantageusement, l'ensemble du circuit aéraulique est conçu pour que la température du flux d'air chaud 25 soit sensiblement inférieure à 200°C au niveau des aliments, et de préférence inférieure à 180°C au niveau des aliments. Une température sensiblement supérieure aux limites précitées est source de mauvaises odeurs et ne permet pas un gain significatif de temps de cuisson.

De manière préférentielle, le ventilateur centrifuge 26 et la pale 16 sont positionnés de façon sensiblement mutuellement opposée relativement au centre de la friteuse 1, matérialisé par l'axe X-X'. Plus particulièrement, le ventilateur 26 sera avantageusement positionné à l'arrière 10 de l'appareil tandis que la pale 16 sera située à l'avant 1, de l'appareil. Cette disposition technique permet de maximiser la longueur du flux aéraulique généré par le ventilateur 26, ce qui contribue à assurer un bon rendement de cuisson. Cette caractéristique peut d'ailleurs être encore améliorée en positionnant l'ouïe d'entrée 27 à une altitude inférieure à celle du bord supérieur 33 du récipient 8.

Afin d'améliorer encore les qualités de cuisson de la friteuse 1 conforme à l'invention, il est intéressant de pourvoir la face interne du récipient 8, destinée à être en regard des aliments, d'un revêtement à base d'un matériau constitué majoritairement de silicone. En particulier, il est intéressant de recouvrir le fond 8A du récipient 8 d'un revêtement de silicone, car le silicone, grâce à ses propriétés de microporosité, présente des qualités spécifiques de réaction avec la matière grasse (émulsion) qui permettent d'obtenir une meilleure répartition de l'huile sur les aliments tout en conservant un excellent coefficient de frottement, ce qui s'avère utile pour la préservation de l'intégrité des aliments lors de l'enduction par brassage.

En outre, un tel plat siliconé a la faculté de chauffer les frites qui sont à son contact, sans les brûler ou les surcolorer comme le ferait un plat métallique par exemple. La demanderesse a ainsi constaté que les propriétés de transfert par conduction entre des frites et un plat siliconé sont sensiblement comparables aux propriétés de transfert par convection forcée de l'air chaud sur les frites. Grâce à une telle enduction de silicone, l'uniformité de cuisson est assurée en évitant en particulier tout brunissage des pointes de frites.

Il est également envisageable que tout ou partie de la face interne du récipient 8 soit revêtue d'un matériau constitué majoritairement de polytétrafluoroéthylène (PTFE), matériau qui présente d'excellente propriétés thermiques et tribologiques.

Le récipient 8 peut cependant être réalisé tout simplement en acier inoxydable, sans traitement de surface particulier.

Avantageusement, la friteuse 1 conforme à l'invention forme, en fonctionnement (c'est-à-dire lorsque le couvercle 2C est fermé), une enceinte de cuisson sensiblement close autour du moyen de réception 5, c'est-à-dire de préférence fermée de façon étanche, ladite enceinte étant de préférence munie d'un moyen de fuite calibrée de vapeur vers l'extérieur (non représenté).

Cette mesure technique permet de contrôler l'hygrométrie régnant au sein de l'enceinte.

A cette fin, le moyen de fuite calibrée de vapeur est dimensionné de façon à :
- éviter une cuisson à l'étouffée, qui aurait lieu si l'enceinte était complètement étanche et qui pourrait provoquer une casse des frites,
- favoriser une consommation économe en énergie, car si l'échappement de vapeur est trop important, cela conduit à une dissipation d'énergie elle aussi importante, qui nécessite de surdimensionner l'élément calorifique 30.

De façon préférentielle, le moyen de fuite calibrée de vapeur comprend un orifice de fuite (non représenté), disposé de préférence au voisinage de l'ouïe d'entrée 27 du ventilateur 26, ce qui permet une évacuation contrôlée en continu de la vapeur tout au long du cycle de cuisson, ainsi qu'un renouvellement contrôlé de l'air à l'intérieur de l'enceinte.

Avantageusement, la friteuse 1 comprend un moyen de stockage 34 de matière grasse 35, distinct du moyen de réception 5 (c'est-à-dire en l'occurrence du récipient 8) et reliée fonctionnellement audit moyen de réception 5 pour alimenter le moyen de réception 5 en matière grasse 35, laquelle se présente de préférence sous forme liquide (ou fondue).

Avantageusement, le moyen de stockage distinct 34 comprend un orifice de déversement 36 muni d'un moyen d'obturation 37, ledit moyen de stockage 34 étant susceptible de se trouver d'une part dans une configuration de rappel et de fermeture (représentées à la figure 2), dans laquelle la matière grasse 35 est maintenue par le moyen d'obturation 37 au sein du moyen de stockage 34 et d'autre part dans une configuration d'ouverture (non représentée), dans laquelle le moyen d'obturation autorise le déversement de la matière grasse 35 par l'orifice 36 hors du moyen de stockage 34 vers le moyen de réception 5, en l'occurrence le récipient 8.

Avantageusement, le moyen de stockage 34 comprend un gobelet 34A muni à sa base d'une bouche formant orifice de déversement 36, le moyen d'obturation 37 comprenant un pointeau à tête divergente solidaire du moyen de réception 5 et inséré dans ladite bouche. Le gobelet 34A est monté à coulissement élastique relativement audit pointeau entre une première position, correspondant à la configuration d'ouverture du moyen de stockage et une deuxième position, correspondant à la configuration de rappel et de fermeture dudit moyen de stockage 34. Le pointeau est quant à lui monté fixe en position au sein du corps principal 2.

Un tel gobelet, qui présente éventuellement des graduations de dosage, permet à l'utilisateur de contrôler précisément la quantité d'huile qu'il introduit dans la friteuse, ce qui permet une économie en matière grasse tout en favorisant une cuisson plus saine.

Avantageusement, le moyen de stockage 34, en l'occurrence le gobelet 34A, est monté sur le moyen de réception 5 pour que lorsque le moyen de stockage 34 se trouve en configuration d'ouverture, la matière grasse 35 se déverse directement dans le moyen de réception 5. A cette fin, le gobelet 34A est monté de préférence coaxialement à l'axe X-X', de telle sorte que l'orifice de déversement 36 forme, en collaboration avec le pointeau, une ouverture en forme de couronne autour du pointeau, de façon à favoriser un écoulement multi-directionnel de la matière grasse 35 sur la paroi latérale interne 8C du récipient 8.

Avantageusement, le couvercle 2C est relié fonctionnellement au moyen de stockage 34 pour que la position de fermeture du couvercle 2C corresponde sensiblement à la configuration d'ouverture dudit moyen de stockage 34.

Ainsi, dans le cas représenté à la figure 2, le couvercle 2C, lorsqu'il est en position fermée, vient presser le gobelet 34A vers le bas ce qui provoque un mouvement relatif du pointeau à tête divergente 37 et dudit gobelet 34A, engendrant l'écoulement de la matière grasse 35.

De préférence, le moyen de stockage 34 est monté de façon amovible relativement au corps principal 2. Avantageusement, le moyen de stockage 34 est à usage unique.

Avantageusement, l'appareil conforme à l'invention peut comporter un orifice permettant le remplissage du moyen de stockage 34 lorsque le couvercle 2C ferme le corps principal 2. Cet orifice d'appoint, qui peut être prolongé d'un conduit, est par exemple ménagé dans le couvercle 2C, ou plus généralement dans le corps principal 2. Cette disposition technique permet de rajouter de la matière grasse alors que la cuisson a commencé, par exemple à la suite d'un oubli, ou pour obtenir des frites un peu plus dorées.

En alternative, la friteuse 1 peut ne pas comprendre de moyen de stockage distinct 34. Dans ce cas, la matière grasse peut être versée directement par l'utilisateur sur les aliments à cuire, dans le récipient 8.

On va maintenant décrire un exemple d'utilisation de la friteuse 1 conforme à l'invention. Dans cet exemple, l'utilisateur se propose de frire 1 Kg de morceaux de pommes de terre fraîches coupées manuellement.

Pour cela, l'utilisateur introduit lesdits morceaux de pommes de terre dans le plat 8. L'utilisateur introduit également une faible quantité d'huile (par exemple 30 grammes ou moins) dans le gobelet 34A. Du fait de la faible quantité d'huile mise en jeu, l'utilisateur peut utiliser une huile d'excellente qualité, qui peut s'avérer meilleure pour la santé et/ou le goût.

L'utilisateur referme ensuite le couvercle 2C, ce qui à pour effet de presser le gobelet 34A vers le bas, parallèlement à l'axe X-X', provoquant ainsi la vidange de l'huile 35 contenue dans le gobelet dans le plat 8. Cette vidange s'effectue idéalement dans toutes les directions, ce qui contribue à favoriser une enduction rapide des aliments.

Le cycle de cuisson démarre alors, ce qui engendre la rotation du récipient 8 autour de l'axe X-X' et donc le brassage à l'aide de la pale fixe 16 des morceaux de pommes de terre et de l'huile répandus dans le plat. Ce brassage conduit à l'établissement d'une pellicule d'huile à la surface de chaque morceau de pomme de terre. Simultanément ou éventuellement après un temps de latence, le ventilateur 26 et l'élément calorifique 30 sont mis en route, ce qui conduit à l'établissement d'un flux d'air chaud 25 qui vient chauffer directement les morceaux de pommes de terre enduits d'huile. Le récipient 8 fait donc office également de récipient de cuisson. La cuisson s'effectue ainsi par chauffage direct des aliments, et non, comme dans l'art antérieur, par immersion des aliments dans un bain de matière grasse chaude.

Dans une première phase du cycle de cuisson, l'air pulsé chauffe les morceaux de pommes de terre de la couche supérieure, lesquels produisent rapidement de la vapeur d'eau. Cette vapeur d'eau, en se condensant sur les morceaux, plus froids, des couches inférieures, fait ainsi office d'échangeur de chaleur avec lesdits morceaux des couches inférieures. Ce mécanisme de cuisson dans une ambiance saturée en vapeur permet ainsi un chauffage rapide et homogène de l'ensemble des morceaux de pommes de terre présents dans le récipient 8. Ce chauffage homogène est facilité par le brassage permanent des morceaux opéré par le récipient 8 rotatif et la pale 16 (cas de la variante de la figure 2) ou par le récipient 8 immobile et la pale 16 rotative (cas de la variante de la figure 6). En d'autres termes, en combinaison avec le récipient tournant et la pale fixe, les flux d'air chaud dirigés vers la pale permettent d'atteindre les aliments dans une zone dans laquelle ils sont en mouvement les uns par rapport aux autres, ce qui augmente encore l'homogénéité de cuisson.

Les aliments sont ainsi soumis à un cycle de chauffe directe par le flux d'air chaud, puis de diffusion/absorption des calories à l'intérieur des aliments, puis à nouveau de chauffe directe par le flux d'air chaud, et ainsi de suite.

De préférence, la vitesse de rotation du récipient 8 est inférieure à 10 tours par minute, et encore plus préférentiellement est sensiblement comprise entre 2 et 3 tours par minute.

Les morceaux subissent une surchauffe lorsqu'ils sont sous le flux direct d'air, et absorbent la chaleur lorsqu'ils quittent cette zone, avant de subir une nouvelle surchauffe. Cette alternance permet une meilleure diffusion de la chaleur dans les aliments, et contribue à éviter un dessèchement excessif.

Il se crée ainsi, dans cette première phase du cycle, un équilibre entre évaporation et recondensation, jusqu'à ce que la vapeur d'eau ait été progressivement évacuée hors de la friteuse par le moyen de fuite calibrée.

Commence alors une deuxième phase de cuisson, lorsque le taux de vapeur a été sensiblement réduit. Durant cette deuxième phase, la température moyenne dans l'enceinte atteint sensiblement 160°C (alors qu'elle était d'environ 100-120°C au cours de la première phase) et la réaction de Maillard (coloration des frites) a lieu. Durant cette deuxième phase, le brassage des morceaux est poursuivi continûment à l'aide de la pale 16 et de la rotation du plat 8, afin d'homogénéiser la cuisson.

Le cycle de cuisson, qui aura duré, dans son intégralité, environ 30 minutes, se termine alors. L'utilisateur peut alors ouvrir le couvercle 2C et extraire simultanément le récipient 8 et la pale 16 à l'aide de la poignée amovible 17.

Le récipient 8 fait alors office de plat de service, et contient désormais des frites prêtes à servir dont le goût et l'aspect sont similaires aux frites fraîches cuites dans un bain d'huile.

Le fait que la poignée 17, qui permet le retrait hors du corps principal 2 du récipient 8 et éventuellement de la pale 16, soit disposée à l'opposé du circuit d'air chaud, relativement au centre de l'appareil, permet une bonne ergonomie de l'appareil.

L'invention concerne ainsi, de manière indépendante (non revendiquée en tant que telle), une friteuse comprenant d'une part un récipient 8 et d'autre part un moyen de remuage 6, lequel est de préférence solidaire d'une poignée 17 permettant l'extraction du récipient 8 hors de l'enceinte de cuisson.

L'invention concerne également un procédé de friture d'aliment comprenant une étape d'enduction dans laquelle les aliments sont enduits d'une pellicule de matière grasse par brassage desdits aliments avec de la matière grasse.

Le procédé de friture conforme à l'invention est un procédé par cuisson sèche, c'est-à-dire que l'opération de cuisson proprement dite n'est pas opérée par une immersion, même partielle ou momentanée, dans un bain de matière grasse chauffée. Le procédé de friture visé est ainsi un procédé sans immersion dans un bain de matière grasse chaude.

De manière préférentielle, le procédé conforme à l'invention est un procédé de friture d'aliments particulaires, tels que des morceaux de pommes de terre. De manière préférentielle, ce procédé est également un procédé domestique, c'est-à-dire qui peut être mis en oeuvre, dans son intégralité, dans un cadre non professionnel, à caractère familial.

Conformément à l'invention, l'étape d'enduction est réalisée de façon automatique, c'est-à-dire sans intervention de l'utilisateur comme cela a été précisé précédemment.

Le procédé conforme à l'invention comprend une étape de chauffage des aliments, les étapes d'enduction et de chauffage étant de préférence menées de façon sensiblement simultanée, ou du moins effectuées à l'aide d'un appareillage unique (comme revendiqué par la revendication 23), et notamment un récipient unique 8 comme cela va être décrit ci-après.

Avantageusement, dans l'étape d'enduction, on met en mouvement les aliments et la matière grasse et on place sur leur trajectoire au moins un obstacle, de façon à remuer lesdits aliments et matière grasse, et enduire ainsi les aliments de matière grasse.

De façon préférentielle, dans l'étape d'enduction, on place les aliments et de la matière grasse dans un récipient 8 susceptible d'être mis en rotation de façon à mettre en mouvement les aliments et la matière grasse, une pale fixe 16 formant moyen de remuage 6 étant positionnée dans le récipient 8, de façon à former un obstacle à l'encontre des aliments mis en mouvement par la rotation du récipient 8. Cela permet de réaliser de façon simple et rapide une enduction sensiblement homogène et individuelle des aliments par une couche de matière grasse.

De manière alternative, tel que cela est illustré à la figure 6, il est bien évidemment envisageable de placer les aliments et la matière grasse dans un récipient 8 immobile, une pale rotative 16 formant moyen de remuage 6 étant positionnée dans le récipient 8, de façon à mettre en mouvement les aliments dans le récipient 8 sous l'effet de la rotation de ladite pale 16.

De manière préférentielle, on génère, dans l'étape de chauffage, un flux d'air chaud orienté de façon à frapper sensiblement directement au moins une partie des aliments, le flux d'air chaud étant orienté de façon préférentielle en direction de la pale 16.

De façon préférentielle, le procédé selon l'invention est effectué dans son intégralité au sein d'une enceinte sensiblement close, le procédé comprenant toutefois, de façon préférentielle, une étape d'évacuation contrôlée vers l'extérieur de la vapeur contenue dans l'enceinte à l'aide d'un moyen de fuite calibrée de vapeur. Le moyen de fuite calibrée de vapeur est avantageusement conçu pour permettre une phase préliminaire de cuisson en ambiance saturée en vapeur, suivie d'une phase ultérieure de brunissage en ambiance peu humide, la majorité de la vapeur créé par la chauffe des aliments en début de cuisson ayant été progressivement et automatiquement évacuée.

Dans ce qui précède, on a envisagé un appareil de cuisson formé par une friteuse.

Il est toutefois envisageable que l'appareil conforme à l'invention soit utilisé pour cuire et/ou réchauffer des aliments sans pour autant les frire, en particulier lorsqu'un fluide de cuisson non gras est mis en oeuvre.

Il est également envisageable d'utiliser l'appareil sans ajout de matière grasse dans le récipient, lorsque cette dernière est déjà contenue dans les aliments (cas d'aliments surgelés et/ou pré-frits par exemple).

### POSSIBILITE D'APPLICATION INDUSTRIELLE

L'invention trouve son application industrielle dans la conception, la fabrication et l'utilisation d'un appareil de cuisson d'aliments.

## Revendications

1. Friteuse à cuisson sèche (1) comprenant un corps principal (2) destiné à accueillir en son sein des aliments à frire, **caractérisée en ce qu'**elle comprend, monté au sein dudit corps principal (2), un moyen (5, 6) pour enduire automatiquement lesdits aliments d'une pellicule de matière grasse par brassage desdits aliments avec de la matière grasse, ladite friteuse comportant, monté sur le corps principal (2), un moyen de chauffe principal (24) conçu pour générer un flux chauffant (25) orienté de façon à frapper sensiblement directement au moins une partie des aliments, ledit moyen de chauffe principal (24) assurant à lui seul au moins l'essentiel de l'apport thermique permettant la cuisson.

2. Friteuse à cuisson sèche (1) selon la revendication 1 **caractérisée en ce que** le moyen de chauffe principal (24) est logé dans le corps principal (2).

3. Friteuse à cuisson sèche (1) selon la revendication 1 ou 2 **caractérisée en ce que** le corps principal (2) est muni d'un couvercle (2C) monté mobile entre d'une part une position de fermeture dans laquelle le couvercle forme avec le corps principal une enceinte sensiblement fermée autour des aliments à frire, et d'autre part une position d'ouverture autorisant l'introduction des aliments à frire au sein du corps principal.

4. Friteuse à cuisson sèche (1) selon l'une des revendications 1 à 3 **caractérisée en ce que** ledit moyen pour enduire automatiquement les aliments d'une pellicule de matière grasse comprend un moyen de réception (5) conçu pour contenir à la fois les aliments et de la matière grasse, le brassage des aliments avec la matière grasse s'effectuant au sein dudit moyen de réception (5).

5. Friteuse à cuisson sèche (1) selon la revendication 4 **caractérisée en ce que** le moyen pour enduire automatiquement les aliments d'une pellicule de matière grasse comprend un moyen de remuage (6) des aliments contenus dans le moyen de réception (5), le moyen de réception (5) et le moyen de remuage (6) étant conçus pour être mis en mouvement l'un par rapport à l'autre, de façon à remuer et enduire les aliments d'une pellicule de matière grasse.

6. Friteuse à cuisson sèche (1) selon la revendication 5 **caractérisée en ce que** le moyen de réception (5) est monté immobile en position relativement au corps principal (2), tandis que le moyen de remuage (6) est d'une part monté à rotation relativement au moyen de réception (5), et d'autre part relié fonctionnellement à un moyen moteur (7) pour être entraîné en rotation par ce derniers.

7. Friteuse à cuisson sèche (1) selon la revendication 5 **caractérisée en ce que** le moyen de remuage (6) est monté immobile en position relativement au corps principal (2), tandis que le moyen de réception(5) est d'une part monté à rotation relativement au corps principal (2) et au moyen de remuage (6) et d'autre part relié fonctionnellement à un moyen moteur (7) pour être entraîné en rotation par ce dernier.

8. Friteuse à cuisson sèche (1) selon la revendication 7 **caractérisée en ce que** le moyen de réception (5) comprend un récipient (8) délimitant un volume interne (9) destiné à accueillir les aliments et de la matière grasse, le moyen de remuage (6) comprenant une pale (16) disposée au sein du volume interne (9), de façon à former un obstacle à l'encontre des aliments mis en mouvement par la rotation du récipient (8).

9. Friteuse à cuisson sèche (1) selon la revendication 8 **caractérisée en ce que** le récipient (8) comprend un fond de récipient (8A) à partir duquel s'élèvent une paroi latérale externe (8B) et une paroi latérale interne (8C) de telle sorte que le récipient (8) présente sensiblement une forme générale de canal annulaire, la pale (16) étant conformée pour d'une part s'élever à partir d'un bord inférieur (16A), située au niveau du fond de récipient (8A), jusqu'à un bord supérieur (16B), et d'autre part s'étendre latéralement sensiblement de la paroi latérale externe (8B) jusqu'à la paroi latérale interne (8C), la pale (16) présentant également une découpure en « *V* » (16C) débouchant sensiblement au niveau du bord supérieur (16B).

10. Friteuse à cuisson sèche (1) selon la revendication 9 **caractérisés en ce que** le bord inférieur (16A) de la pale (16) est incurvé pour guider les aliments vers le bord supérieur (16B) lorsque le récipient (8) est mis en rotation.

11. Friteuse à cuisson sèche (1) selon l'une des revendications 8 à 10 **caractérisée en ce que** le récipient (8) présente une face interne destinée à être en regard des aliments, ladite face interne étant, au moins en partie, revêtue d'un matériau constitué majoritairement de silicone et/ou d'un matériau constitué majoritairement de polytétrafluoroéthylène.

12. Friteuse à cuisson sèche (1) selon l'une des revendications 8 à 11 **caractérisée en ce que** le récipient (8) est monté de façon amovible sur le corps principal (2).

13. Friteuse à cuisson sèche (1) selon l'une des revendications 1 à 12 **caractérisée en ce qu'**elle comprend un moyen de stockage (34) de matière grasse (35), distinct du moyen de réception (5) et relié fonctionnellement à ce dernier pour alimenter ledit moyen de réception (5) en matière grasse (35).

14. Friteuse à cuisson sèche (1) selon l'une des revendications 1 à 13 **caractérisée en ce que** le moyen de chauffe principal (24) est conçu et agencé pour assurer la totalité dudit apport thermique permettant la cuisson.

15. Friteuse à cuisson sèche (1) selon l'une des revendications 1 à 14 **caractérisée en ce que** le flux chauffant (25) est un flux d'air chaud.

16. Friteuse à cuisson sèche (1) selon l'une des revendications 14 et 15 lorsqu'elles incluent l'objet de la revendication 7 **caractérisée en ce que** le flux d'air chauffant (25) est dirigé sensiblement vers la pale (16).

17. Friteuse à cuisson sèche (1) selon la revendication 16 **caractérisée en ce que** le flux d'air chauffant (25) comprend au moins deux veines distinctes qui convergent de façon sensiblement symétrique vers la pale (16).

18. Friteuse à cuisson sèche (1) selon l'une des revendications 15 à 17 **caractérisée en ce que** le corps principal (2) comprend une embase (2A) à partir de laquelle s'élève une jupe latérale (2B), le moyen de chauffe principal (24) comprenant un ventilateur centrifuge (26) positionné latéralement relativement au corps principal (2), ledit ventilateur centrifuge (26) générant un flux aéraulique en aspirant de l'air au sein du corps principal (2) par au moins une ouïe d'entée (27), et en le refoulant, par au moins une ouïe de sortie (28), dans un dispositif de canalisation (29, 29A, 29B) débouchant en direction et au-dessus des aliments présents dans le corps principal (2), le moyen de chauffe principal (24) comprenant également un élément calorifique (30) positionné au sein du flux aéraulique, à l'aval de l'ouïe de sortie (28), de façon à transformer le flux aéraulique en flux chauffant (25).

19. Friteuse à cuisson sèche (1) selon les revendications 16 et 18 **caractérisée en ce que** le ventilateur centrifuge (26) et la pale (16) sont positionnés de façon sensiblement opposée relativement au centre de la friteuse (1).

20. Friteuse à cuisson sèche (1) selon l'une des revendications 1 à 19 **caractérisée en ce qu'**elle forme, en fonctionnement, une enceinte de cuisson sensiblement close munie d'un moyen de fuite calibrée de vapeur vers l'extérieur.

21. Friteuse à cuisson sèche selon l'une des revendications 1 à 20 **caractérisée en ce qu'**elle est conçue et dimensionnée pour frire des aliments particulaires, tels que des morceaux de pommes de terre.

22. Friteuse à cuisson sèche selon l'une des revendications 1 à 21 **caractérisée en ce qu'**elle est conçue et dimensionnée pour un usage domestique.

23. Procédé de friture d'aliments par cuisson sèche **caractérisé en ce qu'**il comprend d'une part une étape d'enduction, dans laquelle les aliments sont enduits d'une pellicule de matière grasse, l'étape d'enduction étant réalisée de façon automatique par brassage desdits aliments avec de la matière grasse, et d'autre part une étape de chauffage desdits aliments à l'aide d'un moyen de chauffe principal (24) conçu pour générer un flux chauffant (25) orienté de façon à frapper sensiblement directement au moins une partie des aliments, ledit moyen de chauffe principal (24) assurant à lui seul au moins l'essentiel de l'apport thermique permettant la cuisson, les étapes d'enduction et de chauffage étant effectuées à l'aide d'un appareillage unique.

24. Procédé selon la revendication 23 **caractérisé en ce que** le moyen de chauffe principal (24) est conçu et agencé pour assurer la totalité dudit apport thermique permettant la cuisson.

25. Procédé selon la revendication 24 **caractérisé en ce que** les étapes d'enduction et de chauffage sont menées de façon sensiblement simultanée.

26. Procédé selon l'une des revendications 24 et 25 **caractérisé en ce que** dans l'étape de chauffage, on génère un flux d'air chaud (25) orienté de façon à frapper sensiblement directement au moins une partie des aliments.

27. Procédé selon l'une des revendications 23 à 26 **caractérisé en ce que** dans l'étape d'enduction, on met en mouvement les aliments et la matière grasse et on place sur leur trajectoire au moins un obstacle, de façon à remuer lesdits aliments et matière grasse, et enduire ainsi les aliments de matière grasse.

28. Procédé selon l'une des revendications 23 à 27 **caractérisé en ce que** dans l'étape d'enduction, on place les aliments et de la matière grasse dans un récipient (8) immobile, une pale rotative (16) formant moyen de remuage (6) étant positionnée dans le récipient (8), de façon à mettre en mouvement les aliments dans le récipient (8) sous l'effet de la rotation de ladite pale (16).

29. Procédé selon l'une des revendications 23 à 28 **caractérisé en ce qu'**il est effectué au sein d'une enceinte sensiblement close.

30. Procédé selon la revendication 29 **caractérisé en ce qu'**il comprend une étape d'évacuation contrôlée vers l'extérieur de la vapeur contenue dans l'enceinte à l'aide d'un moyen de fuite calibrée de vapeur.

31. Procédé de friture d'aliments particulaires, tels que des morceaux de pomme de terre, conforme à l'une des revendications 23 à 30.

32. Procédé domestique de friture conforme à l'une des revendications 23 à 31.

## Claims

1. Dry-cooking fryer (1) comprising a main body (2) intended to accept within it food to be fried, **characterised in that** it comprises, mounted within the said main body (2), a means (5, 6) for automatically coating the said food with a film of fat by stirring the said food with the fat, the said fryer comprising, mounted on the main body (2), a main heating means (24) designed to generate a heating flow (25) oriented so as to strike at least part of the food substantially directly, the said main heating means (24) by itself providing at least most of the contribution of heat for cooking.

2. Dry-cooking fryer (1) according to claim 1, **characterised in that** the main heating means (24) is housed in the main body (2).

3. Dry-cooking fryer (1) according to claim 1 or 2, **characterised in that** the main body (2) is provided with a lid (2C) mounted so as to be able to move between firstly a closed position in which the lid forms with the main body a substantially closed chamber around the food to be fried, and secondly an open position allowing the introduction of the food to be fried within the main body.

4. Dry-cooking fryer (1) according to one of claims 1 to 3, **characterised in that** the said means for automatically coating the food with a film of fat comprises a reception means (5) designed for containing both the food and fat, the stirring of the food with the fat being effected within the said reception means (5).

5. Dry-cooking fryer (1) according to claim 4, **characterised in that** the means for automatically coating the food with a film of fat comprises a means (6) of moving the food contained in the reception means (5), the reception means (5) and the moving means (6) being designed to be set in movement with respect to each other, so as to move and coat the food with a film of fat.

6. Dry-cooking fryer (1) according to claim 5, **characterised in that** the reception means (5) is mounted immovable in position relative to the main body (2), while the moving means (6) is on the one hand mounted for rotation relative to the reception means (5) and on the other hand functionally connected to a drive means (7) in order to be driven in rotation by the latter.

7. Dry-cooking fryer (1) according to claim 5, **characterised in that** the moving means (6) is mounted immovable in position relative to the main body (2), while the reception means (5) is on the one hand mounted for rotation relative to the main body (2) and to the moving means (6) and on the other hand functionally connected to a drive means (7) in order to be driven in rotation by the latter.

8. Dry-cooking fryer (1) according to claim 7, **characterised in that** the reception means (5) comprises a receptacle (8) delimiting an internal volume (9) intended to accept the food and fat, the moving means (6) comprising a blade (16) disposed within the internal volume (9), so as to form an obstacle against the food set in movement by the rotation of the receptacle (8).

9. Dry-cooking fryer (1) according to claim 8, **characterised in that** the receptacle (8) comprises a receptacle bottom (8A) from which there rise an external lateral wall (8B) and an internal lateral wall (8C) so that the receptacle (8) has substantially the general form of an annular channel, the blade (16) being conformed so as on the one hand to rise from a bottom edge (16A) which is situated level with the bottom of the receptacle (8A), as far as a top edge (16B), and on the other hand to extend laterally substantially from the external lateral wall (8B) as far as the internal lateral wall (8C), the blade (16) also having a V-shaped cutout (16C) emerging substantially at the top edge (16B).

10. Dry-cooking fryer (1) according to claim 9, **characterised in that** the bottom edge (16A) of the blade (16) is curved so as to guide the food towards the top edge (16B) when the receptacle (8) is set in rotation.

11. Dry-cooking fryer (1) according to one of claims 8 to 10, **characterised in that** the receptacle (8) has an internal face intended to be opposite the food, the said internal face being, at least partly, coated with a material consisting mainly of silicone and/or a material consisting mainly of polytetrafluoroethylene.

12. Dry-cooking fryer (1) according to one of claims 8 to 11, **characterised in that** the receptacle (8) is mounted removably on the main body (2).

13. Dry-cooking fryer (1) according to one of claims 1 to 12, **characterised in that** it comprises a means (34) of storing fat (35), distinct from the reception means (5) and functionally connected to the latter in order to supply the said reception means (5) with fat (35).

14. Dry-cooking fryer (1) according to one of claims 1 to 13, **characterised in that** the main heating means (24) is designed and arranged so as to provide the entire contribution of heat for cooking.

15. Dry-cooking fryer (1) according to one of claims 1 to 14, **characterised in that** the heating flow (25) is a flow of hot air.

16. Dry-cooking fryer (1) according to one of claims 14 and 15 when they include the object of claim 7, **characterised in that** the heating air flow (25) is directed substantially towards the blade (16).

17. Dry-cooking fryer (1) according to claim 16, **characterised in that** the heating air flow (25) comprises at least two distinct streams that converge substantially symmetrically towards the blade (16).

18. Dry-cooking fryer (1) according to claims 15 to 17, **characterised in that** the main body (2) comprises a base (2A) from which the lateral skirt (2B) rises, the main heating means (24) comprising a centrifugal fan (26) positioned laterally relative to the main body (2), the said centrifugal fan (26) generating a ventilation flow by aspirating air within the main body (2) through at least one inlet orifice (27), and discharging it, through at least one outlet orifice (28), in a channelling device (29, 29A, 29B) emerging in the direction of and above the food present in the main body (2), the main heating means (24) also comprising a heat element (30) positioned within the ventilation flow, downstream of the outlet orifice (28), so as to convert the ventilation flow into a heating flow (25).

19. Dry-cooking fryer (1) according to claims 16 and 18, **characterised in that** the centrifugal fan (26) and the blade (16) are positioned substantially opposite relative to the centre of the fryer (1).

20. Dry-cooking fryer (1) according to one of claims 1 to 19, **characterised in that** it forms, in operation, a substantially closed cooking chamber provided with a means for the calibrated leakage of steam to the outside.

21. Dry-cooking fryer according to one of claims 1 to 20, **characterised in that** it is designed and sized so as to fry particulate food, such as pieces of potato.

22. Dry-cooking fryer according to one of claims 1 to 21, **characterised in that** it is designed and sized for domestic use.

23. Method of frying food by dry cooking, **characterised in that** it comprises firstly a coating step in which the food is coated with a film of fat, the coating step being performed automatically by stirring the said food with fat, and secondly a step of heating the said food using a main heating means (24) designed to generate a heating flow (25) oriented so as to strike at least some of the food substantially directly, the said main heating means (24) providing by itself at least most of the addition of heat for cooking, the coating and heating steps being performed by means of a single appliance.

24. Method according to claim 23, **characterised in that** the main heating means (24) is designed and arranged so as to provide the whole of the addition of heat for cooking.

25. Method according to claim 24, **characterised in that** the coating and heating steps are carried out substantially simultaneously.

26. Method according to one of claims 24 and 25, **characterised in that**, in the heating step, a hot air flow (25) is generated, oriented so as to strike at least some of the food substantially directly.

27. Method according to one of claims 23 to 26, **characterised in that**, in the coating step, the food and fat are set in movement and at least one obstacle is placed on their path, so as to move the said food and fat and thus coat the food with fat.

28. Method according to one of claims 23 to 27, **characterised in that**, in the coating step, the food and fat are placed in an immovable receptacle (8), a rotary blade (16) forming a moving means (6) being positioned in the receptacle (8) so as to set the food in movement in the receptacle (8) under the effect of the rotation of the said blade (16).

29. Method according to one of claims 23 to 28, **characterised in that** it is implemented within a substantially closed chamber.

30. Method according to claim 29, **characterised in that** it comprises a step of controlled discharge to the outside of the steam contained in the chamber using a calibrated steam leakage means.

31. Method of frying particulate food, such as pieces of potato, in accordance with one of claims 23 to 30.

32. Domestic frying method according to one of claims 23 to 31.

## Patentansprüche

1. Fritteuse zur trockenen Garung (1), umfassend einen Hauptkörper (2), der dazu vorgesehen ist, in seinem Inneren die zu frittierenden Nahrungsmittel aufzunehmen, **dadurch gekennzeichnet, dass** sie, montiert im Inneren des Hauptkörpers (2), ein Mittel (5, 6) umfasst, um die Nahrungsmittel durch Mischen der Nahrungsmittel mit Fett automatisch mit einer Fettschicht zu überziehen, wobei die Fritteuse, montiert auf dem Hauptkörper (2), ein Hauptheizmittel (24) umfasst, das dazu entworfen ist, einen Heizfluss (25) zu erzeugen, der so ausgerichtet ist, dass er im Wesentlichen direkt auf mindestens einen Teil der Nahrungsmittel trifft, wobei das Hauptheizmittel (24) alleine mindestens das Wesentliche des thermischen Eintrags sicherstellt, der die Garung ermöglicht.

2. Fritteuse zur trockenen Garung (1) nach Anspruch 1, **dadurch gekennzeichnet, dass** das Hauptheizmittel (24) im Hauptkörper (2) untergebracht ist.

3. Fritteuse zur trockenen Garung (1) nach Anspruch 1 oder 2, **dadurch gekennzeichnet, dass** der Hauptkörper (2) mit einem Deckel (2C) versehen ist, der beweglich zwischen einerseits einer Position des Verschlusses, in der der Deckel mit dem Hauptkörper einen Raum bildet, der im Wesentlichen um die zu frittierenden Nahrungsmittel geschlossen ist, und andererseits einer Position der Öffnung montiert ist, die die Einführung der zu frittierenden Nahrungsmittel in das Innere des Hauptkörpers ermöglicht.

4. Fritteuse zur trockenen Garung (1) nach einem der Ansprüche 1 bis 3, **dadurch gekennzeichnet, dass** das Mittel zum automatischen Überzug der Nahrungsmittel mit einer Fettschicht ein Aufnahmemittel (5) umfasst, das dazu entworfen ist, gleichzeitig die Nahrungsmittel und das Fett zu enthalten, wobei das Mischen der Nahrungsmittel mit dem Fett im Inneren des Aufnahmemittels (5) erfolgt.

5. Fritteuse zur trockenen Garung (1) nach Anspruch 4, **dadurch gekennzeichnet, dass** das Mittel zum automatischen Überzug der Nahrungsmittel mit einer Fettschicht ein Mittel zum Rühren (6) der Nahrungsmittel umfasst, die im Aufnahmemittel (5) enthalten sind, wobei das Aufnahmemittel (5) und das Mittel zum Rühren (6) dazu entworfen sind, im Verhältnis zueinander in Bewegung gesetzt zu werden, um die Nahrungsmittel zu rühren und mit einer Fettschicht zu überziehen.

6. Fritteuse zur trockenen Garung (1) nach Anspruch 5, **dadurch gekennzeichnet, dass** das Aufnahmemittel (5) in einer Position bezüglich des Hauptkörpers (2) unbeweglich montiert ist, während das Mittel zum Rühren (6) einerseits drehbar bezüglich des Aufnahmemittels (5) montiert und andererseits funktional mit einem Motormittel (7) verbunden ist, um durch Letzteres in Drehung versetzt zu werden.

7. Fritteuse zur trockenen Garung (1) nach Anspruch 5, **dadurch gekennzeichnet, dass** das Mittel zum Rühren (6) in einer Position bezüglich des Hauptkörpers (2) unbeweglich montiert ist, während das Aufnahmemittel (5) einerseits drehbar bezüglich des Hauptkörpers (2) und des Mittels zum Rühren (6) montiert und andererseits funktional mit einem Motormittel (7) verbunden ist, um durch Letzteres in Drehung versetzt zu werden.

8. Fritteuse zur trockenen Garung (1) nach Anspruch 7, **dadurch gekennzeichnet, dass** das Aufnahmemittel (5) ein Behältnis (8) umfasst, das ein inneres Volumen (9) begrenzt, dazu vorgesehen, die Nahrungsmittel und das Fett aufzunehmen, wobei das Mittel zum Rühren (6) eine Schaufel (16) umfasst, die im Inneren des Innenvolumens (9) angebracht ist, um ein Hindernis gegen die Nahrungsmittel zu bilden, die durch die Drehung des Behältnisses (8) in Bewegung versetzt werden.

9. Fritteuse zur trockenen Garung (1) nach Anspruch 8, **dadurch gekennzeichnet, dass** das Behältnis (8) einen Behältnisboden (8A) umfasst, von dem aus sich eine äußere Seitenwand (8B) und einer innere Seitenwand (8C) so erheben, dass das Behältnis (8) im Wesentlichen die allgemeine Form eines ringförmigen Kanals aufweist, wobei die Schaufel (16) dazu angepasst ist, sich einerseits von einem unteren Rand (16A), der sich auf der Ebene des Behältnisbodens (8A) befindet, bis zu einem oberen Rand (16B) zu erheben, und sich andererseits seitlich im Wesentlichen von der äußeren Seitenwand (8B) bis zur inneren Seitenwand (8C) zu erstrecken, wobei die Schaufel (16) auch einen Einschnitt in Form eines "V" (16C) aufweist, der im Wesentlichen auf der Ebene des oberen Randes (16B) mündet.

10. Fritteuse zur trockenen Garung (1) nach Anspruch 9, **dadurch gekennzeichnet, dass** der untere Rand (16A) der Schaufel (16) gekrümmt ist, um die Nahrungsmittel zum oberen Rand (16B) zu führen, wenn das Behältnis (8) in Drehung versetzt wird.

11. Fritteuse zur trockenen Garung (1) nach einem der Ansprüche 8 bis 10, **dadurch gekennzeichnet, dass** das Behältnis (8) eine Innenseite aufweist, die dazu vorgesehen ist, den Nahrungsmitteln gegenüber zu liegen, wobei die Innenseite mindestens teilweise mit einem Material beschichtet ist, das mehrheitlich aus Silikon besteht, und/oder einem Material, das mehrheitlich aus Polytetrafluorethylen besteht.

12. Fritteuse zur trockenen Garung (1) nach einem der Ansprüche 8 bis 11, **dadurch gekennzeichnet, dass** das Behältnis (8) abnehmbar auf dem Hauptkörper (2) montiert ist.

13. Fritteuse zur trockenen Garung (1) nach einem der Ansprüche 1 bis 12, **dadurch gekennzeichnet, dass** sie ein Mittel zum Speichern (34) des Fetts (35) umfasst, das vom Aufnahmemittel (5) verschieden ist und funktional mit Letzterem verbunden ist, um das Aufnahmemittel (5) mit Fett (35) zu versorgen.

14. Fritteuse zur trockenen Garung (1) nach einem der Ansprüche 1 bis 13, **dadurch gekennzeichnet, dass** das Hauptheizmittel (24) dazu entworfen und ausgebildet ist, die Gesamtheit des thermischen Eintrags, der die Garung ermöglicht, sicherzustellen.

15. Fritteuse zur trockenen Garung (1) nach einem der Ansprüche 1 bis 14, **dadurch gekennzeichnet, dass** der Heizfluss (25) ein Heißluftfluss ist.

16. Fritteuse zur trockenen Garung (1) nach einem der Ansprüche 14 und 15, wenn sie den Gegenstand von Anspruch 7 enthalten, **dadurch gekennzeichnet, dass** der Heizluftfluss (25) im Wesentlichen auf die Schaufel (16) gerichtet ist.

17. Fritteuse zur trockenen Garung (1) nach Anspruch 16, **dadurch gekennzeichnet, dass** der Heizluftfluss (25) mindestens zwei verschiedene Stränge umfasst, die auf eine im Wesentlichen symmetrische Weise zur Schaufel (16) hin zusammenlaufen.

18. Fritteuse zur trockenen Garung (1) nach einem der Ansprüche 15 bis 17, **dadurch gekennzeichnet, dass** der Hauptkörper (2) einen Sockel (2A) umfasst, von dem aus sich ein Seitenmantel (2B) erhebt, wobei das Hauptheizmittel (24) ein Radialgebläse (26) umfasst, das seitlich bezüglich des Hauptkörpers (2) angebracht ist, wobei das Radialgebläse (26) einen Luftfluss erzeugt, indem es Luft in das Innere des Hauptkörpers (2) durch mindesten eine Eingangssaugöffnung (27) ansaugt und sie durch mindestens eine Ausgangssaugöffnung (28) in eine Kanalisationsvorrichtung (29, 29A, 29B) ausstößt, die in Richtung und über den Nahrungsmitteln, die im Hauptkörper (2) vorhanden sind, mündet, wobei das Hauptheizmittel (24) auch ein thermisches Element (30) umfasst, das innerhalb des Luftflusses angebracht ist, der Ausgangssaugöffnung (28) nachgeordnet, um den Luftfluss in einen Heizfluss (25) umzuwandeln.

19. Fritteuse zur trockenen Garung (1) nach Anspruch 16 und 18, **dadurch gekennzeichnet, dass** das Radialgebläse (26) und die Schaufel (16) auf eine hinsichtlich des Zentrums der Fritteuse (1) im Wesentlichen gegenüberliegende Weise angebracht sind.

20. Fritteuse zur trockenen Garung (1) nach einem der Ansprüche 1 bis 19, **dadurch gekennzeichnet, dass** sie im Betrieb einen im Wesentlichen geschlossenen Garraum bildet, der mit einem Mittel zum kalibrierten Austritt von Dampf nach außen ausgestattet ist.

21. Fritteuse zur trockenen Garung nach einem der Ansprüche 1 bis 20, **dadurch gekennzeichnet, dass** sie entworfen und dimensioniert ist, um zerteilte Nahrungsmittel wie z.B. Kartoffelstücke zu frittieren.

22. Fritteuse zur trockenen Garung nach einem der Ansprüche 1 bis 21, **dadurch gekennzeichnet, dass** sie für eine Verwendung im Haushalt entworfen und dimensioniert ist.

23. Verfahren zum Frittieren von Nahrungsmitteln durch trockene Garung, **dadurch gekennzeichnet, dass** es einerseits einen Schritt des Überzugs umfasst, in dem die Nahrungsmittel mit einer Fettschicht überzogen werden, wobei der Schritt des Überzugs automatisch durch Mischen der Nahrungsmittel mit dem Fett erfolgt, und andererseits einen Schritt des Erhitzens der Nahrungsmittel mithilfe eines hauptsächlichen Heizmittels (24), das dazu entworfen ist einen Heizfluss (25) zu erzeugen, der so ausgerichtet ist, dass er im Wesentlichen direkt auf mindestens einen Teil der Nahrungsmittel trifft, wobei das Hauptheizmittel (24) alleine mindestens das Wesentliche des thermischen Eintrags sicherstellt, der die Garung ermöglicht, wobei die Schritte des Überzugs und des Erhitzens mithilfe eines einzigen Gerätes durchgeführt werden.

24. Verfahren nach Anspruch 23, **dadurch gekennzeichnet, dass** das Hauptheizmittel (24) dazu entworfen und ausgebildet ist, um die Gesamtheit des thermischen Eintrags, der die Garung ermöglicht, sicherzustellen.

25. Verfahren nach Anspruch 24, **dadurch gekennzeichnet, dass** die Schritte des Überzugs und des Erhitzens im Wesentlichen gleichzeitig erfolgen.

26. Verfahren nach einem der Ansprüche 24 und 25, **dadurch gekennzeichnet, dass** beim Schritt des Erhitzens ein Heißluftfluss (25) erzeugt wird, der so ausgerichtet ist, dass er mindestens auf einen Teil der Nahrungsmittel im Wesentlichen direkt trifft.

27. Verfahren nach einem der Ansprüche 23 bis 26, **dadurch gekennzeichnet, dass** beim Schritt des Überzugs die Nahrungsmittel und das Fett in Bewegung gesetzt werden und auf ihrem Weg mindestens ein Hindernis angebracht wird, um die Nahrungsmittel und das Fett zu rühren und so die Nahrungsmittel mit Fett zu überziehen.

28. Verfahren nach einem der Ansprüche 23 bis 27, **dadurch gekennzeichnet, dass** beim Schritt des Überzugs die Nahrungsmittel und das Fett in ein unbewegliches Behältnis (8) gegeben werden, wobei eine drehende Schaufel (16) ein Mittel zum Rühren (6) bildet, das im Behältnis (8) angebracht ist, um die Nahrungsmittel im Behältnis (8) unter dem Einfluss der Drehung der Schaufel (16) in Bewegung zu setzen.

29. Verfahren nach einem der Ansprüche 23 bis 28, **dadurch gekennzeichnet, dass** es im Inneren eines im Wesentlichen geschlossenen Raums durchgeführt wird.

30. Verfahren nach Anspruch 29, **dadurch gekennzeichnet, dass** es einen Schritt zur kontrollierten Abführung des Dampfes nach außen, der im Raum enthalten ist, mithilfe eines Mittels zum geregelten Austritt des Dampfes umfasst.

31. Verfahren zum Frittieren von zerteilten Nahrungsmitteln, wie z.B. Kartoffelstücken, nach einem der Ansprüche 23 bis 30.

32. Haushaltsverfahren zum Frittieren nach einem der Ansprüche 23 bis 31.
